# EUROPÄISCHE PATENTANMELDUNG

(11) **EP 3 936 637 A1**
(43) Veröffentlichungstag der Anmeldung: **12.01.2022**
(21) Anmeldenummer: 21183756.2
(22) Anmeldetag: 05.07.2021
(51) Int. Cl.: C23C 24/04, C23C 24/08, C23C 26/00, C23C 28/04, C23C 28/00, F02F 3/14

(54) **VERFAHREN ZUM BESCHICHTEN EINES KOLBENS**

(30) Priorität: 07.07.2020 DE 102020208462
(71) Anmelder: MAHLE International GmbH, 70376 Stuttgart (DE)
(72) Erfinder: KÖRNER, Stephan, 74369 Löchgau (DE); LECKER, Alois, 70597 Stuttgart (DE); LOPEZ, Daniel, 70188 Stuttgart (DE); ROSE, Reinhard, 70736 Fellbach (DE)
(74) Vertreter: BRP Renaud & Partner mbB Rechtsanwälte Patentanwälte Steuerberater

(57) **Zusammenfassung**

Die vorliegende Erfindung betrifft ein Verfahren zum Beschichten eines Kolbens (1) mit einer Schicht (12). Eine reduzierte Ablagerung auf den Kolben (1) bei erhöhter Effizienz der zugehörigen Brennkraftmaschine und erhöhter Lebensdauer werden dadurch erreicht, dass zum Beschichten der Schicht (12) eine Suspension mit einem Lösungsmittel, einem Binder sowie im Binder verteilte Glashohlkugeln (14) und Keramikpartikeln (15) hergestellt und auf dem Kolben (1) aufgetragen wird, wobei anschließend zur Herstellung der Schicht (12) das Lösungsmittel entfernt wird.

Die Erfindung betrifft zudem einen derart beschichteten Kolben (1).

## Beschreibung

Die vorliegende Erfindung betrifft ein Verfahren zum Beschichten eines Kolbens einer Brennkraftmaschine. Die Erfindung betrifft zudem einen derartig beschichteten Kolben

Kolben kommen in Brennkraftmaschinen zum Einsatz und sind in einem Zylinder der Brennkraftmaschine verstellbar angeordnet. Ein Kolbenboden des Kolbens, der üblicherweise einen Feuersteg aufweist, begrenzt mit dem Zylinder einen Verbrennungsraum, in welchem im Betrieb der Brennkraftmaschine ein Brennstoffluftgemisch brennt. Der Kolben, insbesondere der Kolbenboden, sowie der Zylinder sind somit hohen thermischen und thermochemischen Belastungen ausgesetzt.

Zur Effizienzsteigerung der Brennkraftmaschine und/oder zum Verbessern des sogenannten Klopfverhaltens ist eine kontrollierte und ausreichende Verbrennung des Brennstoffs notwendig. Dies erfordert insbesondere eine gewünschte Temperaturverteilung bzw. eine gewünschte minimale Temperatur innerhalb des gesamten Verbrennungsraums. Der Kolben stellt mit seinen den Verbrennungsraum begrenzenden Bestandteilen, d. h. insbesondere mit dem Kolbenboden, einen Rand des Verbrennungsraums dar, der potenziell eine im Vergleich zum angrenzenden Verbrennungsraum reduzierte Temperatur aufweisen kann. Dies führt zu Ablagerungen, insbesondere von Ruß, und/oder zu einer unerwünscht reduzierten Verbrennung des Brennstoffs. Verstärkt wird dieser Effekt dadurch, dass Kolben in der Regel einen in der Nähe des Kolbenbodens angeordneten Kühlkanal aufweisen, über den der Kolben und insbesondere der Kolbenboden im Betrieb gekühlt wird.

Aus der DE 31 33 223 C2 ist es bekannt, einen Kolben, insbesondere den Kolbenboden, mit einer Schicht zu beschichten, welche durch ein vorgegebenes thermisches Eindringvermögen sowie durch eine vorgegebene thermische Leitfähigkeit eine starke Abkühlung des den Verbrennungsraum begrenzenden Bereichs des Kolbens reduziert. Die Schicht umfasst Hohlkugeln sowie anorganische Stoffe, die in einem Polyamid-Hartschaum aufgenommen sind.

Aus der DE 10 2012 025 283 A1 ist es bekannt, als Schicht eines Kolbens einen geschlossenporigen Schaum zu verwenden.

In der DE 10 2017 207 236 A1 ist ein Kolben offenbart, der mit einer Keramikverbund-Wärmesperrenbeschichtung auf Basis von Zirkoniumdioxid beschichtet ist.

Nachteilig bei den aus der Stand der Technik bekannten Schichten von Kolben ist insbesondere eine unzureichende und/oder ungleichmäßige Sperre bzw. Reduzierung des Wärmeeintrags vom Verbrennungsraum zum Kolben. Dies führt im Betrieb zu erhöhten Ablagerung auf dem Kolben und/oder zu einer reduzierten Effizienz der zugehörigen Brennkraftmaschine.

Die vorliegende Erfindung beschäftigt sich daher mit der Aufgabe, für ein Verfahren zum Beschichten eines Kolbens mit einer Schicht sowie für einen solchen Kolben verbesserte oder zumindest andere Ausführungsformen anzugeben, welche sich durch im Betrieb reduzierte Ablagerungen auf dem Kolben und/oder eine erhöhte Effizienz der zugehörigen Brennkraftmaschine auszeichnen.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einen Kolben durch den Auftrag einer keramischen Suspension zu beschichten, wobei in der Suspension keramische Partikeln sowie Glashohlkugeln verteilt angeordnet sind. Dies erlaubt eine gleichmäßige Verteilung der Keramikpartikeln und der Glashohlkugeln in der Suspension und somit in der durch das Aufbringen der Suspension hergestellten Schicht. Somit erfolgen eine gleichmäßige Ausbildung der Schicht hinsichtlich der thermischen Eigenschaften, insbesondere hinsichtlich der Reduzierung der Wärmeeindringtiefe und/oder eine mit der Schicht erzielte Wärmesperre, über die gesamte Schicht. Darüber hinaus lassen sich die Keramikpartikeln und die Glashohlkugeln auf diese Weise vereinfacht mit einer gewünschten Verteilung und/oder einer gewünschten Größe, insbesondere Größenverteilung, auf dem Kolben auftragen, wobei die Größenverteilung und die Form der Glashohlkugeln und der Keramikpartikeln in der anschließend hergestellten Schicht erhalten bleiben. Die erfindungsgemäße Idee erlaubt es also, eine Schicht herzustellen, in der Glashohlkugeln und Keramikpartikeln gleichmäßig verteilt sind und in welcher sich die Form und/oder Größe der Keramikpartikeln und der Glashohlkugeln zuverlässig und gezielt wählen lassen. Folglich wird mit der Schicht eine verbesserte Reduzierung der Wärmeeindringtiefe zwischen dem Kolben und einem durch den Kolben begrenzten Verbrennungsraum in einem zugehörigen Zylinder einer Brennkraftmaschine erreicht. Zugleich führt die Schicht durch die reduzierte Wärmeeindringtiefe in den Kolben zu einer Reduzierung der thermisch bedingten Belastungen und Beschädigungen des Kolbens. Folglich sind Ablagerungen auf dem Kolben reduziert und die Verbrennung eines Brennstoffs im Verbrennungsraum verbessert, sodass die Effizienz der Brennkraftmaschine bei einer erhöhten Lebensdauer des Kolbens verbessert ist.

Die erfindungsgemäße Schicht hat ferner ein vorteilhaftes Einstellen, insbesondere eine Senkung, der Wärmeleitung und der Wärmekapazität derart zur Folge, dass eine zügige Anpassung der Temperatur an der Oberfläche des Kolbens im Verbrennungsraum erfolgt. Somit erfolgen eine zugängige Abkühlung der Oberfläche bzw. der Schicht beim Ansaugen oder Einbringen eines Luft-Kraftstoff-Gemischs und eine zügige Erhöhung der Temperatur beim Verbrennen des Gemischs. Es erfolgt also eine zügiges "Mitschwingen" der Temperatur, dem Fachmann auch als "Thermo-swing" bekannt.

Dem Erfindungsgedanken entsprechend wird zum Beschichten des Kolbens mit der Schicht der Kolben bereitgestellt. Der Kolben weist ein Kolbenhemd und einen Kolbenboden auf. Der Kolbenboden begrenzt beim Einsatz in einem zugehörigen Zylinder einer Brennkraftmaschine gemeinsam mit dem Zylinder den Verbrennungsraum. Zum Beschichten des Kolbens wird zunächst die keramische Suspension hergestellt. Die keramische Suspension umfasst ein Lösungsmittel sowie einen Binder, der im Lösungsmittel gelöst ist. In dem Binder sind die Glashohlkugeln sowie die Keramikpartikeln verteilt. Die Suspension wird zum Beschichten des Kolbens auf dem Kolben aufgetragen. Zum Herstellen der Schicht erfolgt das Lösen des Lösungsmittels, sodass der Binder eine Matrix der Schicht bildet, in welcher die Glashohlkugeln und die Keramikpartikeln verteilt angeordnet sind.

Das Lösen des Lösungsmittels kann prinzipiell auf beliebige Art erfolgen. Insbesondere kann das Lösen des Lösungsmittels durch ein Verdampfen und/oder Ausbrennen des Lösungsmittels erzielt werden.

Der Kolbenboden weist vorteilhaft einen Feuersteg auf. Somit erfolgt im Betrieb des Kolbens eine verbesserte Verbrennung im Verbrennungsraum.

Die Suspension kann neben dem Lösungsmittel, dem Binder, den Glashohlkugeln sowie den Keramikpartikeln Bestandteile zur Stabilisierung der Suspension enthalten. Hierzu zählen insbesondere Dispergierhilfen sowie Stabilisatoren wie beispielsweise Tenside und Silikane.

Die Herstellung der Schicht, insbesondere das Lösen des Lösungsmittels, erfolgt zweckmäßig derart, dass eine Zerstörung der Glashohlkugeln ausbleibt.

Die Schicht kann prinzipiell eine beliebige Dicke aufweisen.

Bevorzugt ist es, wenn die Schicht eine Schichtdicke zwischen 40 µm und 200 µm, insbesondere zwischen 50 µm und 100 µm aufweist. Somit wird eine ausreichend hohe mechanische und/oder thermochemische Stabilität der Schicht bei zugleich ausreichend niedriger Wärmeeindringtiefe in den Kolben erreicht.

Die Schicht ist zweckmäßig für Gase, insbesondere für Sauerstoff, sowie für Fluide, insbesondere für Wasser, undurchlässig. Auf diese Weise werden thermochemische Belastungen des Kolbens reduziert. Zudem werden Beschädigungen der Schicht, welche durch das Eindringen von Gasen und/oder Flüssigkeiten in die Schicht verursacht werden können, verhindert oder zumindest reduziert.

Die Schicht kann prinzipiell auf einem beliebigen Bereich des Kolbens beschichtet sein.

Bevorzugt ist die Schicht zumindest auf dem Kolbenboden, vorzugsweise samt Feuersteg, beschichtet. Da der Kolbenboden samt Feuersteg im zugehörigen Zylinder den Verbrennungsraum begrenzt, wird somit ein besonders effektiver Schutz des Kolbens und/oder eine vorteilhafte Reduzierung von Ablagerungen sowie Erhöhung des verbrannten Brennstoffs erreicht. Bevorzugt ist es ferner, wenn die Schicht ausschließlich auf dem Kolbenboden aufgebracht ist. Somit kann der Kolben kostengünstiger hergestellt werden.

Vorteilhaft ist es, wenn die Schicht die äußerste Lage des Kolbens, insbesondere des Kolbenbodens, bildet. Somit wird die Wärmeübertragung vom Verbrennungsraum in den Kolben und/oder andere Lagen, welche zwischen dem Kolben und der Schicht angebracht sein können, reduziert, sodass ein verbesserter Schutz des Kolbens samt möglicherweise vorhandenen anderen Lagen erfolgt.

Bei bevorzugten Ausführungsformen wird der Kolben derart beschichtet, dass die Schicht einen Anteil von zumindest 50 Massenprozent, nachfolgend auch %-Masse genannt, an den Keramikpartikeln enthält. Das heißt insbesondere, dass die keramische Suspension einen entsprechenden Anteil von Keramikpartikeln enthält. Als besonders bevorzugt gelten Ausführungsformen, bei denen die Schicht einen Anteil zwischen 50 %-Masse und 80 %-Masse Keramikpartikeln, besonders bevorzugt 69 %-Masse Keramikpartikeln, enthält.

Prinzipiell kann es sich bei dem Binder um einen beliebigen Binder handeln, sofern dieser für die Herstellung der Schicht geeignet sowie den Betrieb in der zugehörigen Brennkraftmaschine beständig, insbesondere temperaturbeständig, ist.

Bevorzugt sind Ausführungsformen, bei denen der Binder ein anorganischer Binder, besonders bevorzugt ein ionisch anorganischer Binder, ist. Das heißt, dass die keramische Suspension mit einem anorganischen Binder, insbesondere einem ionischen anorganischen Binder, hergestellt wird. Dementsprechend handelt es sich bei der Matrix der Schicht um eine anorganische Matrix, bevorzugt eine ionische anorganische Matrix.

Der, insbesondere ionische, anorganische Binder ist bevorzugt ein Salz, insbesondere ein Phosphat, beispielsweise Monoaluminiumphosphat und/oder Polyphosphat. Das heißt, dass die keramische Suspension mit einem Salz, insbesondere mit einem Phosphat, beispielsweise Monoaluminiumphosphat und/oder Polyphosphate, als Binder hergestellt wird.

Alternativ oder zusätzlich kann der Binder Wasserglas sein bzw. Wasserglas enthalten. Das heißt, dass die keramische Suspension alternativ oder zusätzlich mit Wasserglas als Binder hergestellt wird. Beim Wasserglas handelt es sich hierbei insbesondere um amorphes Natriumsilicat und/oder Kaliumsilicat.

Vorstellbar ist es ebenso, als Binder alternativ oder zusätzlich Bentonit, Kaolinit, Montmorillonit, Zement, Gips, ungebrannten Kalk und dergleichen einzusetzen.

Beim Lösungsmittel kann es sich prinzipiell um ein beliebiges handeln, sofern es das Lösen des Binders in der Suspension erlaubt. Insbesondere kann das Lösungsmittel mehrere Bestandteile aufweisen.

Bevorzugt ist es, wenn das Lösungsmittel wässrig ist. Das heißt, dass die Suspension mit einem wässrigen Lösungsmittel hergestellt wird.

Alternativ oder zusätzlich kann das Lösungsmittel ein polares Lösungsmittel zum Lösen von Salzen, insbesondere des ionisch anorganischen Binders, sein. Das heißt, dass die Suspension alternativ oder zusätzlich mit einem polaren Lösungsmittel zum Lösen von Salzen hergestellt wird.

Vorstellbar ist es, dass das Lösungsmittel alternativ oder zusätzlich kurzkettige Alkohole enthält. Das heißt, dass die Suspension alternativ oder zusätzlich mit kurzkettigen Alkoholen als Lösungsmittel hergestellt wird.

Bevorzugt und zweckmäßig macht die Matrix und somit der Binder einen geringen Anteil der hergestellten Schicht aus.

Bevorzugt macht die Matrix maximal 5 %-Masse der hergestellten Schicht aus. Besonders bevorzugt macht die Matrix 3 %-Masse der hergestellten Schicht aus. Das heißt, dass der Kolben derart beschichtet wird, dass die hergestellte Schicht einen Anteil von kleiner als 5 %-Masse, bevorzugt 3 %-Masse, aufweist, die Schicht also zu maximal 5 %-Masse aus der Matrix bzw. dem Binder besteht.

Bei den Keramikpartikeln kann es sich prinzipiell um beliebige Partikeln handeln.

Bevorzugt handelt es sich bei den Keramikpartikeln um Oxide, Nitride, Karbide oder Mischungen draus. Insbesondere handelt es sich bei den Keramikpartikeln um Zirkoniumdioxid, Korund und/oder Saphir (Al₂O₃), Titaniumdioxid, Siliziumdioxid und dergleichen oder Mischungen draus.

Als vorteilhaft gelten Ausführungsformen, bei denen die Keramikpartikeln in der Matrix und somit in der Schicht eine Größenverteilung mit d50 zwischen 0,5 µm und 1 µm, insbesondere 0,8 µm, aufweisen. d50 gibt insbesondere an, dass 50% der Partikeln kleiner als der angegebene Wert und/oder 50% größer als der angegebene Wert sind.

Die Glashohlkugeln der Suspension und somit der Schicht können prinzipiell aus einem beliebigen Material oder Werkstoff hergestellt sein.

Als bevorzugt gelten Ausführungsformen, bei denen die Glashohlkugeln aus einem Metalloxid oder Metalloxiden hergestellt sind. Bevorzugt sind die Glashohlkugeln aus Siliziumdioxid hergestellt. Beispielsweise können die Glashohlkugeln Glassbubbles des Typs "S32HS" des Anbieters 3M sein. Alternativ oder zusätzlich können Glashohlkugeln zum Einsatz kommen, die aus Siliziumdioxid bestehen.

Vorstellbar ist es, als Glashohlkugeln alternativ oder zusätzlich Borosilikatgläser einzusetzen.

Bevorzugt weisen die Glashohlkugeln in der Schicht eine Größenverteilung mit d50 zwischen 20 µm und 65 µm auf. Das heißt, dass der Kolben derart beschichtet wird, dass die Glashohlkugeln in der Schicht eine Größenverteilung mit d50 zwischen 20 µm und 65 µm aufweisen.

Vorteilhaft weist die Schicht einen Massenanteil an den Glashohlkugeln auf, der unterhalb des Anteils der Keramikpartikeln und oberhalb des Anteils der Matrix liegt.

Als bevorzugt gelten Ausführungsformen, bei denen der Anteil der Glashohlkugeln in der Schicht zwischen 25 %-Masse und 35 %-Masse, bevorzugt 28 %-Masse liegt. Das heißt, dass der Kolben derart beschichtet wird, dass die Schicht einen Anteil von zwischen 25 %-Masse und 35 %-Masse, insbesondere 28 %-Masse, Glashohlkugeln aufweist.

Es versteht sich, dass neben dem Verfahren zum Beschichten des Kolbens auch der mit der Schicht beschichtete Kolben als solcher zum Umfang dieser Erfindung gehört.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert, wobei sich gleiche Bezugszeichen auf gleiche oder ähnliche oder funktional gleiche Komponenten beziehen.

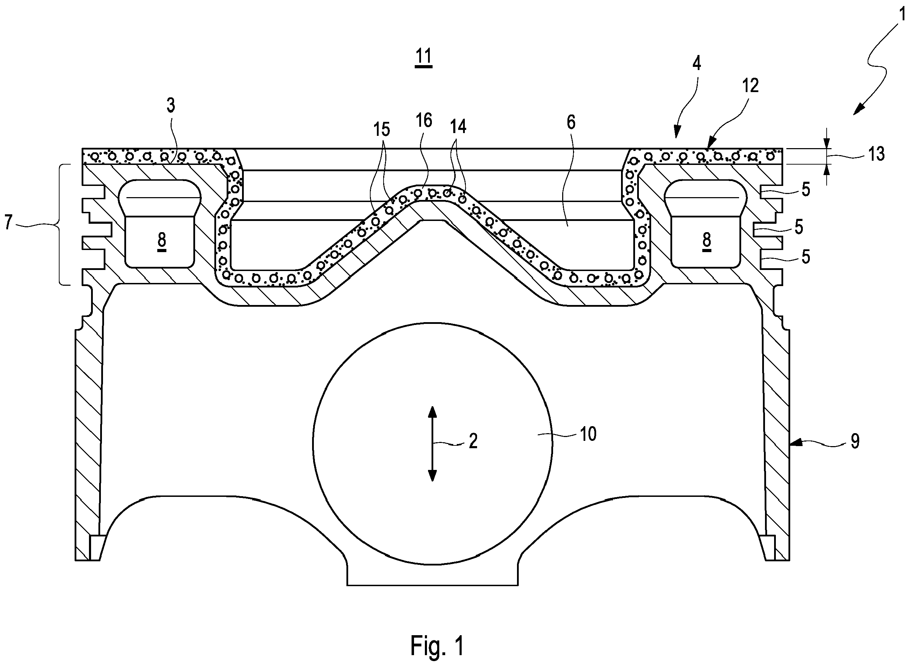

Es zeigt, die einzige
- Fig. 1: einen Schnitt durch einen Kolben.

Ein Kolben 1, wie er beispielsweise in Figur 1 gezeigt ist, weist in einer Axialrichtung 2 außen eine Stirnseite 3 auf. An der Stirnseite 3 des Kolbens 1 weist der Kolben 1 einen Kolbenboden 4 auf, der sich axial in den Kolben 1 hineinerstreckt und einen Feuersteg 6 aufweist. Der Kolben 1 des gezeigten Ausführungsbeispiels weist radial außen zumindest eine Ringnut 5 auf. Beim gezeigten Ausführungsbeispiel sind rein beispielhaft drei solche Ringnuten 5 vorgesehen. Die Ringnuten 5 erstrecken sich jeweils umlaufend und sind radial nach außen offen. In zumindest einer der Ringnuten 5, vorteilhaft in der jeweiligen Ringnut 5, ist ein nicht gezeigter Kolbenring aufgenommen. Die Ringnuten 5 sind hierbei in einer Ringpartie 7 des Kolbens 1 angeordnet. Radial zwischen den Ringnuten 5 und dem Kolbenboden 4, insbesondere dem Feuersteg 6, kann ein Kühlkanal 8 des Kolbens 1 angeordnet sein, der umlaufend verläuft. Der Kühlkanal 8 dient dem Kühlen des Kolbens 1 und kann mit einem entsprechenden Kühlmittel befüllt und/oder im Betrieb versorgt sein.

Auf der axial von der Stirnseite 3 abgewandten Seite der Ringpartie 7 weist der Kolben 1 ein Kolbenhemd 9, auch Kolbenschaft 9 genannt, auf. Der Kolben 1 weist ferner ein Bolzenloch 10 auf, das axial zur Stirnseite 3 beabstandet ist. Der Kolben 1 ist über das Bolzenloch 10 mit einer zugehörigen, nicht gezeigten Pleuelstange einer zugehörigen, im Übrigen nicht gezeigten Brennkraftmaschine verbunden. In der zugehörigen Brennkraftmaschine begrenzt der Kolbenboden 4 mit einem nicht gezeigten Zylinder einen Verbrennungsraum 11.

Der Kolben 1 ist mit einer Schicht 12 beschichtet, welche im gezeigten Ausführungsbeispiel auf dem Kolbenboden 4 samt Feuersteg 6 beschichtet ist. Die Schicht 12 weist eine Schichtdicke 13 zwischen 50 µm und 100 µm auf und ist in Figur 1 zum besseren Verständnis vergrößert dargestellt. Die Schicht 12 enthält kreisförmig angedeutete Glashohlkugeln 14 sowie punktförmig angedeutete Keramikpartikeln 15, welche in der Schicht 12 gleichmäßig verteilt sind. Die Glashohlkugeln 14 und die Keramikpartikeln 15 sind in einer Matrix 16 der Schicht 12 aufgenommen.

Die Schicht 12 besteht zwischen 50 Massenprozent, nachfolgend auch %-Masse genannt, und 80 %-Masse, insbesondere zu 69 %-Masse, aus den Keramikpartikeln 15. Hierbei weisen die Keramikpartikeln 15 eine Größenverteilung mit d50 zwischen 0,5 µm und 1 µm, insbesondere 0,8 µm, auf. Bei den Keramikpartikeln 15 handelt es sich insbesondere um Oxide, Nitride, Karbide oder Mischungen draus. Insbesondere handelt es sich bei den Keramikpartikeln 15 um Zirkoniumdioxid, Saphir, Titaniumdioxid, Siliziumdioxid und dergleichen.

Die Schicht 12 besteht zu maximal 5 %-Masse aus der Matrix 16. Insbesondere besteht die Schicht 12 zu 3 %-Masse aus der Matrix 16.

Die Glashohlkugeln 14 sind vorzugsweise aus Metalloxiden hergestellt, bestehen insbesondere aus Metalloxiden. Die Glashohlkugeln 14 sind vorteilhaft aus Siliziumdioxiden hergestellt, bestehen insbesondere aus Siliziumdioxid. Dabei besteht die Schicht 12 bevorzugt zwischen 25 %-Masse und 35 %-Masse, vorteilhaft 28 %-Masse, aus den Glashohlkugeln 14. Die Glashohlkugeln 14 weisen eine Größenverteilung mit d50 zwischen 20 µm und 65 µm auf.

Die Schicht 12 ist zweckmäßig undurchlässig für Wasser und Dampf sowie Luft, insbesondere Sauerstoff.

Zum Beschichten des Kolbens 1 mit der Schicht 12 wird eine Suspension aus einem Lösungsmittel und einem Binder hergestellt, wobei der Binder in der späteren Schicht 12 die Matrix 16 bildet. Die Glashohlkugeln 14 und die Keramikpartikeln 15 sind in dem Binder verteilt. Die Suspension wird auf dem Kolben 1, insbesondere dem Kolbenboden 4, aufgetragen und das Lösungsmittel anschließend gelöst, beispielsweise ausgedampft und/oder ausgebrannt.

Bei dem Lösungsmittel handelt es sich vorzugsweise um ein wässriges Lösungsmittel, das alternativ oder zusätzlich polar sein kann. Ebenso ist es vorstellbar, dass das Lösungsmittel kurzkettige Alkohole enthält.

Bei dem Binder handelt es sich vorzugsweise um einen anorganischen, vorzugsweise ionischen, Binder. Insbesondere ist der Binder ein Salz, beispielsweise Phosphat, insbesondere Monoaluminiumphosphat und/oder Polyphosphat. Alternativ oder zusätzlich kann der Binder Wasserglas enthalten.

Die Schicht 12 reduziert die Wärmeübertragung vom Verbrennungsraum 11 auf den Kolbenboden 4. In der Folge weist die den Verbrennungsraum 11 begrenzende Schicht 12 eine gleichmäßige und im Vergleich zum Kolbenboden 4 erhöhte Temperatur auf. Dies führt zu einem verbesserten Verbrennungsverhalten des im Verbrennungsraum 11 verbrannten Brennstoffs sowie einer reduzierten Belastung des Kolbens 1, insbesondere des Kolbenbodens 4.

## Patentansprüche

1. Verfahren zum Beschichten eines Kolbens (1) einer Brennkraftmaschine mit einer Schicht (12), mit den Verfahrensmaßnahmen:
- Bereitstellen eines Kolbens (1), der ein Kolbenhemd (9) und einen Kolbenboden (4) mit einem Feuersteg (6) aufweist,
- Herstellen einer keramischen Suspension, die aufweist:
• ein Lösungsmittel,
• einen Binder, der im Lösungsmittel gelöst ist,
• im Binder verteilte Glashohlkugel (14),
• im Binder verteilte Keramikpartikeln (15),
- Auftragen der Suspension auf den Kolben (1),
- Entfernen des Lösungsmittels und somit Herstellen der Schicht (12), sodass der Binder eine Matrix (16) der Schicht (12) bildet, in der die Glashohlkugeln (14) und die Keramikpartikeln (15) verteilt angeordnet sind.

2. Verfahren nach Anspruch 1,
**dadurch gekennzeichnet,**
**dass** der Kolben (1) derart beschichtet wird, dass die Schicht (12) einen Anteil von zumindest 50 %-Masse Keramikpartikeln (15), insbesondere 69 %-Masse Keramikpartikeln (15), aufweist.

3. Verfahren nach Anspruch 1 oder 2,
**dadurch gekennzeichnet,**
**dass** die keramische Suspension mit einem anorganisch Binder, insbesondere einem ionischen anorganischen Binder, hergestellt wird.

4. Verfahren nach Anspruch 3,
**dadurch gekennzeichnet,**
- **dass** die keramische Suspension mit einem Salz, insbesondere mit einem Phosphat, beispielsweise Monoaluminiumphosphat und/oder Polyphosphate, als Binder hergestellt wird, und/oder
- **dass** die keramische Suspension mit Wasserglas als Binder hergestellt wird.

5. Verfahren nach einem der Ansprüche 1 bis 4,
**dadurch gekennzeichnet,**
- **dass** die Suspension mit einem wässrigen Lösungsmittel hergestellt wird, und/oder
- **dass** die Suspension mit einem polaren Lösungsmittel zum Lösen von Salzen hergestellt wird, und/oder
- **dass** die Suspension mit kurzkettigen Alkoholen als Lösungsmittel hergestellt wird.

6. Verfahren nach einem der Ansprüche 1 bis 5,
**dadurch gekennzeichnet,**
**dass** der Kolben (1) derart beschichtet wird, dass die Schicht (12) einen Anteil von kleiner als 5 %-Masse der Matrix (16), insbesondere 3 %-Masse der Matrix (16), aufweist.

7. Verfahren nach einem der Ansprüche 1 bis 6,
**dadurch gekennzeichnet,**
**dass** die Suspension mit Oxiden und/oder Nitriden und/oder Karbiden als Keramikpartikeln (15) hergestellt wird.

8. Verfahren nach einem der Ansprüche 1 bis 7,
**dadurch gekennzeichnet,**
**dass** der Kolben (1) derart beschichtet wird, dass die Keramikpartikeln (15) in der Schicht (12) eine Größenverteilung mit d50 zwischen 0,5 µm und 1,0 µm, insbesondere 0,8 µm, aufweisen.

9. Verfahren nach einem der Ansprüche 1 bis 8,
**dadurch gekennzeichnet,**
**dass** die Suspension mit Glashohlkugeln (14) hergestellt wird, die aus Siliziumdioxide hegestellt sind, insbesondere aus Siliziumdioxid bestehen.

10. Verfahren nach einem der Ansprüche 1 bis 9,
**dadurch gekennzeichnet,**
**dass** der Kolben (1) derart beschichtet wird, dass die Glashohlkugeln (14) in der Schicht (12) eine Größenverteilung mit d50 zwischen 20 µm und 65 µm aufweisen.

11. Verfahren nach einem der Ansprüche 1 bis 10,
**dadurch gekennzeichnet,**
**dass** der Kolben (1) derart beschichtet wird, dass die Schicht (12) einen Anteil von zwischen 25 %-Masse und 35 %-Masse, insbesondere 28 %-Masse, Glashohlkugeln (14) aufweist.

12. Verfahren nach einem der Ansprüche 1 bis 11,
**dadurch gekennzeichnet,**
**dass** die Schicht (12) auf dem Kolbenboden (4) samt Feuersteg (6) beschichtet wird.

13. Verfahren nach einem der Ansprüche 1 bis 12,
**dadurch gekennzeichnet,**
**dass** der Kolben (1) derart beschichtet wird, dass die Schicht (12) eine Schichtdicke (13) zwischen 50 µm und 100 µm aufweist.

14. Kolben (1) einer Brennkraftmaschine mit einem Kolbenhemd (9) und einem Kolbenboden (4), wobei der Kolben (1) gemäß dem Verfahren nach einem der Ansprüche 1 bis 13 mit einer Schicht (12) beschichtet ist.
